# EUROPEAN PATENT SPECIFICATION

(11) **EP 2 390 233 B1**
(45) Date of publication and mention of the grant of the patent: **24.04.2013**
(21) Application number: 11164696.4
(22) Date of filing: 04.05.2011
(51) Int. Cl.: C02F 1/68, C02F 5/00

(54) **Cabinet for water softener**
Schrank für Wasserenthärter
Armoire pour adoucisseur d'eau

(30) Priority: 17.05.2010 IT BS20100096
(43) Date of publication of application: 30.11.2011
(73) Proprietor: Hydro System Treatment S.r.l., 25020 San Gervasio Bresciano (BS) (IT)
(72) Inventor: Zinoni, Francesco, I-25020, San Gervasio Bresciano, BRESCIA (IT); Bertoli, Lorenzo, I-25020, Offlaga, BRESCIA (IT)
(74) Representative: Pulieri, Gianluca Antonio

(56) References cited:
- US-A- 5 651 880

## Description

The present invention relates to a cabinet for water purification and treatment equipment, for domestic or industrial use. In particular, the present invention relates to a cabinet for water softeners.

In the water softeners sector, the cabinet is a container used to house the cylinder containing the water filtering resins and to contain the brine used to regenerate the resins, so that the equipment also has a pleasing appearance.

Examples of cabinets for water softeners are illustrated in the patents EP1776320 and EP2158162 in the name of the Applicant.

To regenerate the resins, the water softener performs a regeneration cycle during which brine is aspirated from the bath of water and brine contained in a tank of the cabinet. To facilitate the aspiration of the brine, preventing the brine grains or tablets from obstructing aspiration, a tube fitted with a perforated wall is housed in the brine tank of the cabinet.

Inside the tube only brine is present, while the brine grains or tablets remain outside. The aspiration of the brine is performed inside the tube.

However the solution presents several drawbacks.

For example, the tube is separable from the cabinet and can be moved, for example during inspection operations of the brine or following knocks to the cabinet which risk jeopardising the aspiration of the brine.

The purpose of the present invention is to make a cabinet for water softeners able to overcome the drawbacks spoken of in relation to the prior art.

Such purpose is achieved by a cabinet according to claim 1.

The characteristics and advantages of the cabinet according to the present invention will be evident from the description given below, made by way of a nonlimiting example, according to the appended drawings, wherein:

figure 1 shows a cabinet from the outer side, fitted with a lid, made according to one embodiment of the present invention;

figure 2 shows the cabinet fitted with lid in figure 1; from the inner side;

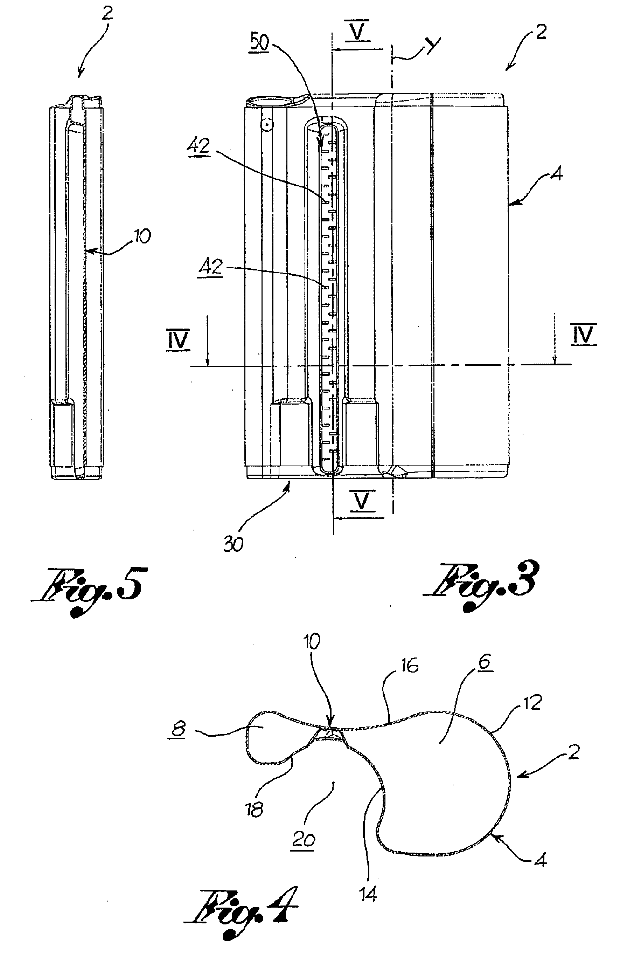

figure 3 shows a lateral view of the cabinet in figure 2;

figure 4 shows a cross-section taken along the section line IV-IV in figure 3;

figure 5 shows a cross-section taken along the section line V-V in figure 3;

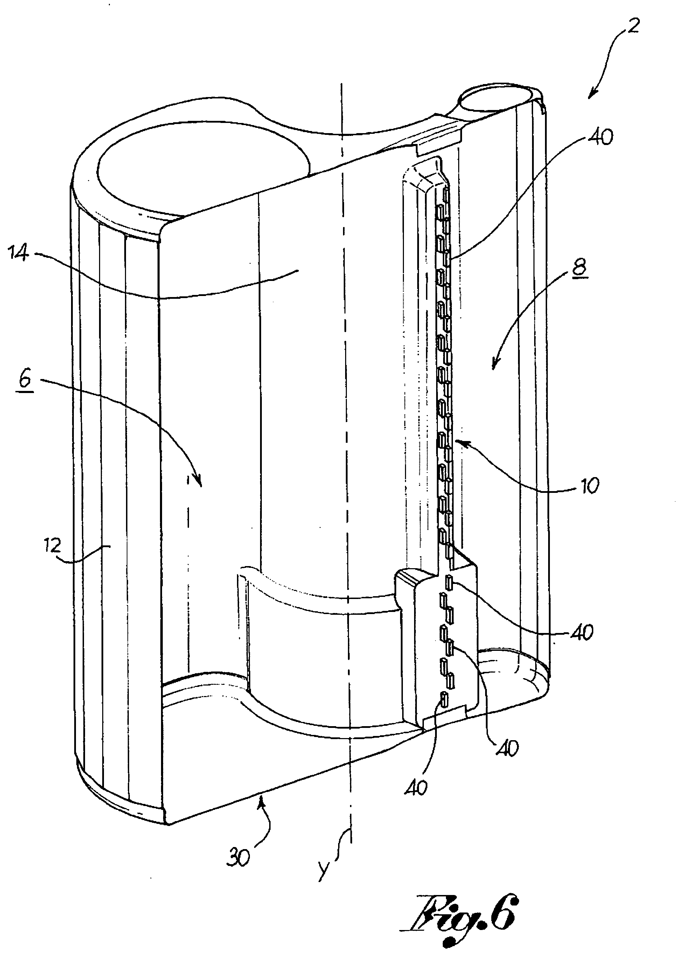

figure 6 shows a partial view of the cabinet in figure 1;

figures 7 and 8 show embodiment variations in partial cross-section, of the cabinet according to the present invention.

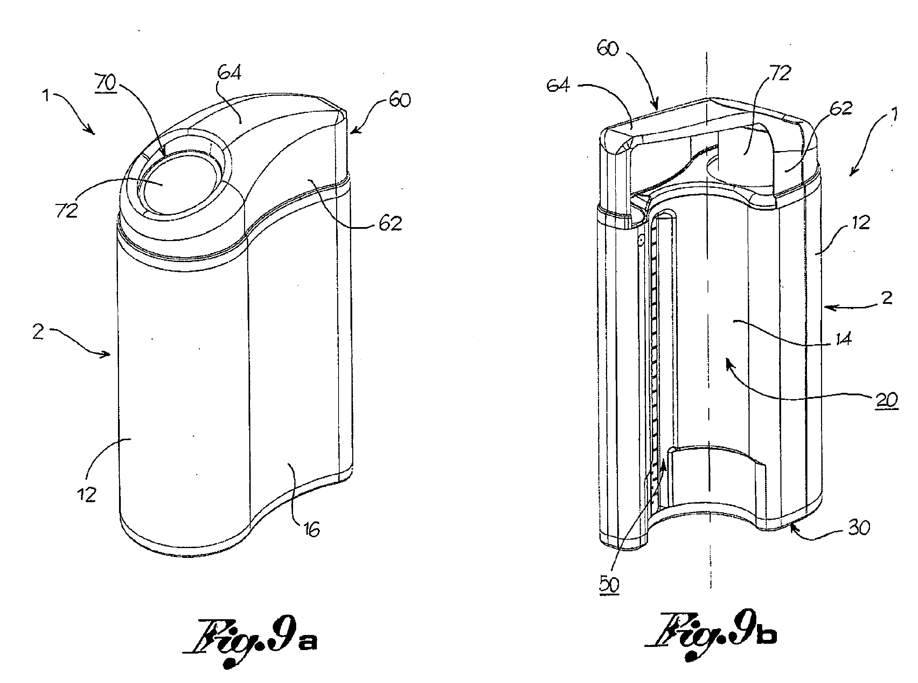

figures 9a and 9b show the cabinet according to the present invention, fitted with a lid with mouth;

figures 10a and 10b show the cabinet according to the present invention, fitted with an upper plate; and

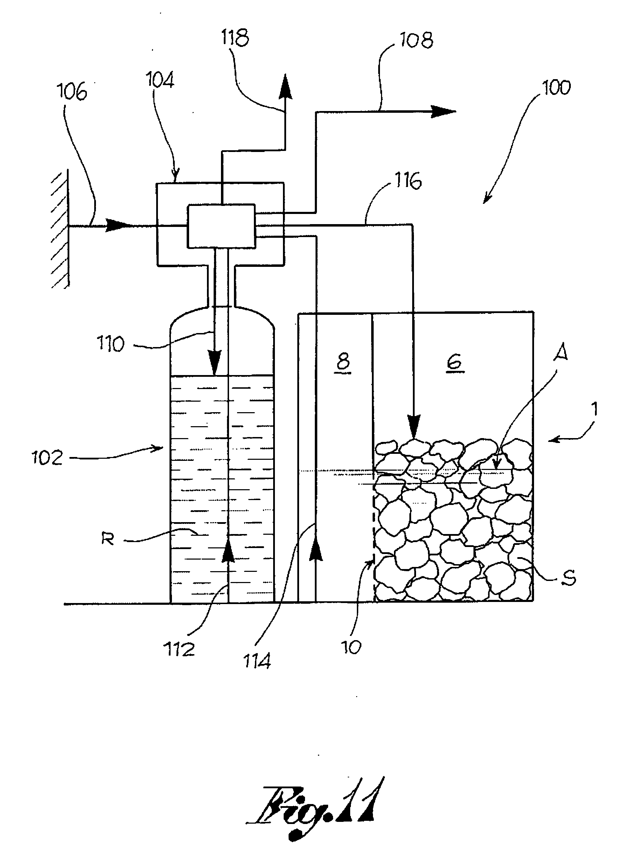

figure 11 is a functioning diagram of a water softener comprising the cabinet according to the present invention.

According to the present invention, a water treatment and purification apparatus, denominated water softener, comprises a cabinet assembly 1, comprising a cabinet 2.

The cabinet 2 consists of a casing formed by an annular wall 4 which extends in height along a vertical axis Y; the wall 4 is closed annularly and forms a brine tank 6 and a mineral tank 8, separated from each other by filtration means 10.

Preferably, the annular wall 4 comprises a front portion 12, convex towards the outside, and a first rear portion 14, concave towards the outside, connected to each other, so as to delimit the brine tank 6 at the front and rear.

Moreover, preferably, the wall 4 comprises a lateral portion 16, concave towards the outside, which in part delimits the brine tank 6 and the mineral tank 8.

Preferably, moreover, the wall 4 comprises a second rear portion 18, concave towards the outside, which in part delimits the mineral tank.

The first rear portion 14 and the second rear portion 18 are preferably positioned on an imaginary circumference, and delimit a cylinder compartment 20 for housing the cylinder of the water softener.

In other words, the transversal cross-section of the cabinet, that is the cross-section made with a plane orthogonal to the vertical axis, has a front zone which progressively narrows towards the rear zone, to form the cylinder compartment.

The cabinet assembly 1, further comprises a bottom 30, preferably made in one piece and separate from the cabinet 2, couplable to the cabinet to close the brine tank 6 and the mineral tank 8 on the bottom.

The filtration means 10 of the cabinet 2 are suitable for preventing the passage of the grains or tablets forming the brine, over a predefined size from the brine tank 6 to the mineral tank 8.

In other words, the filtration means of the cabinet prevent the passage of the grains or tablets into the mineral tank 8, preventing the aspiration of the brine from being obstructed by said grains or tablets.

Said filtration means 10 are however permeable to water, so that the water can distribute itself between the brine tank and the mineral tank, according to the principle of communicating vessels.

The filtration means extend from the bottom of the cabinet to a predefined height, preferably for the entire height of the cabinet, between the brine tank 6 and the mineral tank 8.

Preferably, the filtration means 10 are formed of protrusions 40 which form a filtration grid internally to the wall 4 between the brine tank 6 and the mineral tank 8.

Preferably, the protrusions 40 are made in the same wall 4 and are therefore in one piece with it; this way, for example, an outer recess 42 of the same shape corresponds to each inner protrusion 40.

Externally to the wall 4, on the side of the cylinder compartment 20, there is an auxiliary compartment 50, in which the recesses 42 corresponding to the inner protrusions 40 are visible.

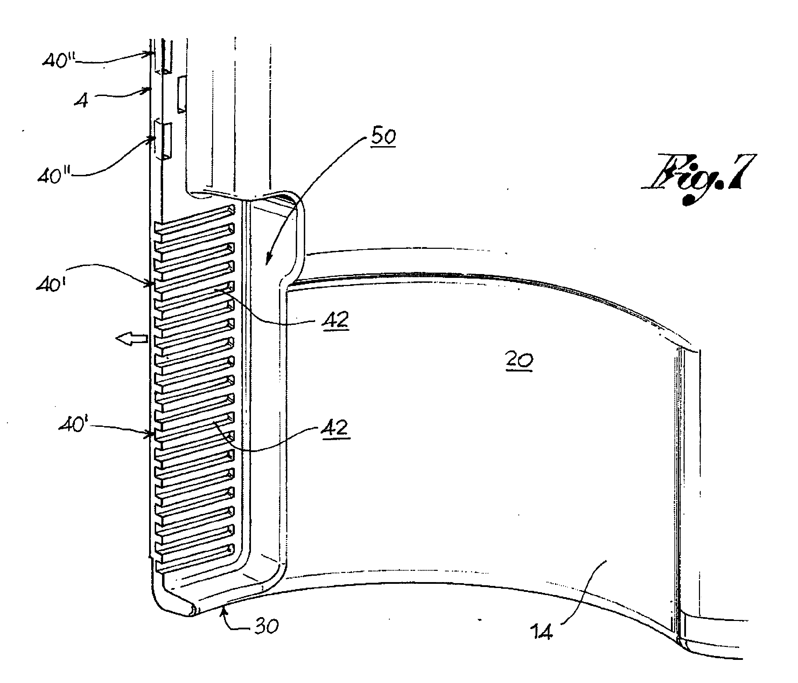

According to one embodiment, the filtration means 10 envisage (figure 7):

- from the bottom of the cabinet to a first predefined height, rectangular and parallel protrusions 40' which are axially superposed and are elongated in the direction of transit of the brine;

- from the first predefined height to a second predefined height, for example to the top of the cabinet, rectangular protrusions 40" elongated axially, alternating on two parallel rows arranged next to one another in the direction of transit of the brine.

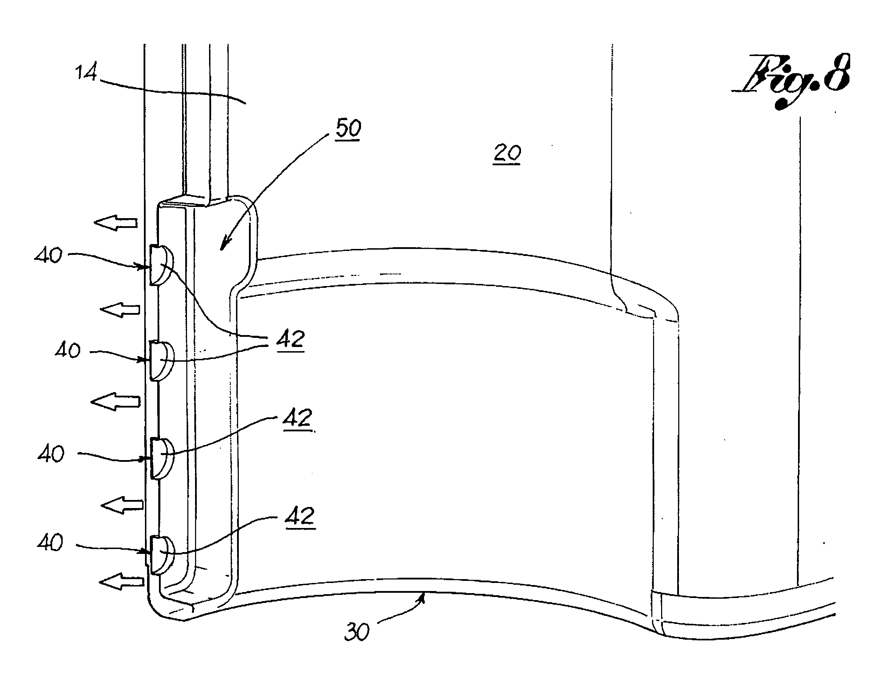

According to a further embodiment, the protrusions have a circular imprint (figure 8).

Preferably, the cabinet is made in one piece, in plastic material, by blow moulding. This enables production of the filtration means in a particularly economical and rapid manner.

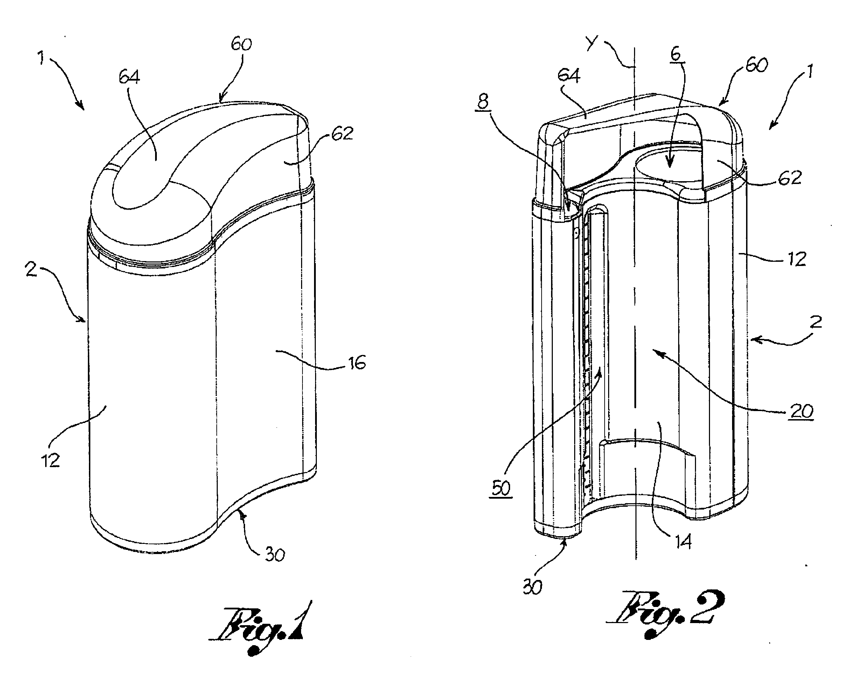

The cabinet assembly 1, further comprises according to one embodiment, a lid 60, which can couple to the top of the cabinet, to cover the cylinder compartment 20 (figures 1 and 2).

The lid 60 comprises a lateral skirt 62 and a covering 64; the covering 64 entirely covers the imprint corresponding to the wall 4 of the cabinet; the lateral skirt 62 rather, according to one embodiment, is interrupted annularly, leaving an opening on the side of the cylinder 20.

In particular, the skirt 62 of the lid 60 does not rest on the first posterior portion 14 of the wall 4 of the cabinet; that which delimits the brine tank 6 at the front.

According to yet a further embodiment, the lid 60 of the cabinet assembly 1, has a mouth opening 70 through the covering 64, in correspondence with the brine tank 6.

The lid 60 further comprises an annular mouth wall 72, which surrounds the mouth opening 70 and projects internally from the covering 64 as far as the upper opening of the brine tank 6.

The mouth opening 70 and the mouth wall 72 form a mouth for the brine to be poured into the brine tank 6.

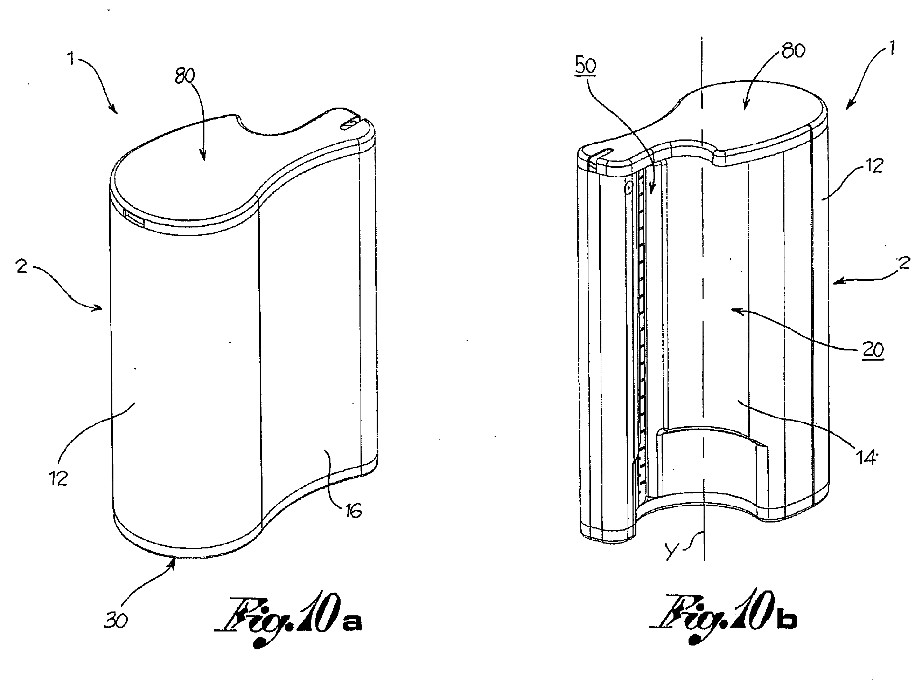

According to further embodiments, the cabinet assembly 1, comprises an upper cover plate 80, outwardly flat on the top, connectable to the top of the cabinet 2 (figures 10a and 10b).

A water softener 100 comprises the cabinet assembly 1 described above and a cylinder 102 destined to contain the resin R for filtering the water coming from the water mains arranged in the cylinder compartment 20 of the cabinet 2.

The water softener 100, further comprises a valve group 104, connected at the front of the mouth of the cylinder, and ducts for the water connected to the valve group.

In particular, a supply duct 106 is provided, connectable to the water mains and to the valve group, and a dispenser duct 108, connected to the valve group and the utility.

Moreover, an outgoing duct 110 and a return duct 112 connected to the valve group and inserted in the cylinder 102 containing the resin are provided. In particular the return duct comes out near the bottom of the cylinder 102, while the outgoing duct 110 comes out near the top of the cylinder 102.

During normal functioning of the water softener, the valve group sends the water taken from the mains through the supply duct 106 to the cylinder through the outgoing duct 110; the water sent to the cylinder goes through the resin, thus softening, and goes to the bottom of the cylinder from where the valve group aspirates it by means of the return duct 112 and sends it to the dispenser duct 108 towards the utility.

At scheduled intervals or on the basis of a servicing schedule or manually as needed, the valve group performs a regeneration cycle of the resin.

At rest, the cabinet contains a bath formed of brine S and water A in the brine tank 6; brine A is also present in the mineral tank 8, in communication with the brine tank; the filtration means 10 prevent grains or tablets of the brine S from passing into the mineral tank 8.

The brine tank provides a mineral duct 114, connected to the valve group and inserted in the mineral tank of the cabinet, in general reaching as far as the bottom of it, and a top-up duct 116,connected to the valve group and inserted in the brine tank 6 of the cabinet.

During the regeneration cycle, the valve group aspirates brine through the mineral duct 114 inserted in the mineral tank 8 and sends it to the cylinder by means of the return duct 112, which comes out on the bottom of the cylinder.

The brine rises through the resin present in the cylinder and regenerates it and is aspirated by the valve group by means of the outgoing duct 110, which comes out on the top of the cylinder. The aspirated brine is drained through the drainage duct 118.

If needed, the valve group takes water from the mains by means of the supply duct 106 and sends it to the brine tank 6 through the top-up duct 116, to maintain a useful level of water in the brine tank.

Innovatively, the cabinet according to the present invention, makes it possible to perform the regeneration cycle without mishap.

Moreover, advantageously, the cabinet according to the present invention makes it possible to minimise the costs of the finished product in that the cabinet also integrates the mineral tank.

According to a further advantageous aspect tanks, protrusions, curvatures of the wall composing the cabinet contribute to its structural reinforcement, making the cabinet particularly stable and resistant.

It is clear that a person skilled in the art may make modifications to the cabinet described above so as to satisfy specific and contingent requirements, all contained within the sphere of protection as defined by the following.

## Claims

1. Cabinet (2) for a water softener (100) comprising an annularly closed wall (4), having extension in the height direction along a vertical axis (Y), which forms a brine tank (6) and a mineral tank (8), said tanks being in fluid communication for the passage of water and being separated by filtration means (10) for keeping the brine grains or tablets away in the brine tank (6), **characterized in that** the filtration means (10) comprise protrusions (40, 40', 40") arranged between the brine tank and the mineral tank so as to form a filtration grid.

2. Cabinet according to claim 1, wherein the filtration means are permeable to water.

3. Cabinet according to claim 1 or 2, wherein the filtration means extend from the bottom of the cabinet to a predefined height, for example to the top of said cabinet.

4. Cabinet according to any one of claims 1 to 3, wherein the protrusions (40, 40', 40") project from the wall (4) and are formed in one piece with it.

5. Cabinet according to claim 4, wherein a recess (42) on the other face of the wall (4) corresponds to each protrusion of identical shape.

6. Cabinet according to claim 4 or 5, wherein the filtration means 10 provide:
- from the bottom of the cabinet (2) to a first predefined height, rectangular and parallel protrusions (40') which are superposed axially and are elongated in the direction of transit of the brine;
- from the first predefined height to a second predefined height, for example to the top of the cabinet, rectangular protrusions (40") elongated axially, alternating on two parallel rows arranged next to one another in the direction of transit of the brine.

7. Cabinet according to any one of claims 4 to 6, wherein the protrusions have a circular imprint.

8. Cabinet according to any one of the preceding claims, wherein the wall (4) comprises a front portion (12) in the shape of an arc, convex towards the outside, which partially delimits the brine tank (6).

9. Cabinet according to any one of the preceding claims, wherein the wall (4) comprises a first posterior portion (14) in the shape of an arc, concave towards the outside, which partially delimits the brine tank (6).

10. Cabinet according to any one of the preceding claims, wherein the wall (4) comprises a lateral portion (16) in the shape of an arc, concave towards the outside, which partially delimits the brine tank (6) and the mineral tank (8).

11. Cabinet according to any one of the preceding claims, wherein the wall (4) comprises a second posterior portion (18) in the shape of an arc, concave towards the outside, which partially delimits the mineral tank (8).

12. Cabinet according to claims 9 and 11, wherein the posterior portions (14, 18) are located on an imaginary circular-cylindrical surface so as to partially delimit a cylinder compartment (20).

13. Cabinet according to any one of the preceding claims, made from plastics material, for example by blow moulding.

14. Cabinet assembly (1) comprising:
- a cabinet (2) according to any one of the preceding claims;
- a lid (60) separable from the cabinet.

15. Cabinet assembly according to claim 14, wherein the lid comprises a skirt (62) interrupted annularly.

16. Cabinet assembly according to claim 14 or 15, wherein the lid has a mouth opening (70) and a mouth wall (72) protruding internally from the lid (64), which forms a mouth towards the opening of the brine tank (6).

17. Water softener (100) comprising:
- a cabinet (2) according to any one of claims 1 to 13;
- a cylinder (102) housed in the cylinder compartment (20) of the cabinet (2).

## Patentansprüche

1. Schrank (2) für einen Wasserenthärter (100), der eine ringförmig geschlossene Wand (4) mit einer Verlängerung in der Höhenrichtung entlang einer vertikalen Achse (Y) umfasst, die einen Salzlösungsbehälter (6) und einen Mineralienbehälter (8) bildet, wobei die Behälter für den Durchgang von Wasser in einer Fluidverbindung stehen und durch Filterungsmittel (10) getrennt sind, um die Salzlösungskörner oder Tabletten in dem Salzlösungsbehälter (6) fern zu halten, **dadurch gekennzeichnet, dass** die Filtermittel (10) Vorsprünge (40, 40', 40") umfassen, die zwischen dem Salzlösungsbehälter und dem Mineralienbehälter angeordnet sind, um ein Filtergitter bzw. -netz zu bilden.

2. Schrank nach Anspruch 1, wobei die Filtermittel wasserdurchlässig sind.

3. Schrank nach Anspruch 1 oder 2, wobei die Filtermittel sich von der Unterseite des Schranks bis zu einer vordefinierten Höhe, zum Beispiel bis zu der Oberseite des Schranks, erstrecken.

4. Schrank nach einem der Ansprüche 1 bis 3, wobei die Vorsprünge (40, 40', 40") von der Wand (4) vorstehen und in einem Stück mit ihr ausgebildet sind.

5. Schrank nach Anspruch 4, wobei eine Vertiefung (42) auf der anderen Seite der Wand (4) jedem Vorsprung mit identischer Form entspricht.

6. Schrank nach Anspruch 4 oder 5, wobei die Filtermittel (10) bereitstellen:
- rechteckige und parallele Vorsprünge (40'), die axial überlagert und in der Durchgangsrichtung der Salzlösung verlängert sind, von der Unterseite des Schranks (2) bis zu einer ersten vordefinierten Höhe;
- axial verlängerte rechteckige Vorsprünge (40"), die in zwei parallelen Reihen, die in der Durchgangsrichtung der Salzlösung abwechseln, von der ersten vordefinierten Höhe zu einer zweiten vordefinierten Höhe nebeneinander angeordnet sind.

7. Schrank nach einem der Ansprüche 4 bis 6, wobei die Vorsprünge eine kreisförmige Prägung haben.

8. Schrank nach einem der vorhergehenden Ansprüche, wobei die Wand (4) einen vorderen Abschnitt (12) in der Form einer bogenförmigen Wölbung nach außen umfasst, der den Salzlösungsbehälter (6) teilweise begrenzt.

9. Schrank nach einem der vorhergehenden Ansprüche, wobei die Wand (4) einen ersten hinteren Abschnitt (14) in der Form einer bogenförmigen Wölbung nach außen umfasst, der den Salzlösungsbehälter (6) teilweise begrenzt.

10. Schrank nach einem der vorhergehenden Ansprüche, wobei die Wand (4) einen seitlichen Abschnitt (16) in der Form einer bogenförmigen Wölbung nach außen umfasst, der den Salzlösungsbehälter (6) und den Mineralienbehälter (8) teilweise begrenzt.

11. Schrank nach einem der vorhergehenden Ansprüche, wobei die Wand (4) einen zweiten hinteren Abschnitt (18) in der Form einer bogenförmigen Wölbung nach außen umfasst, der den Mineralienbehälter (8) teilweise begrenzt.

12. Schrank nach den Ansprüchen 9 und 11, wobei die hinteren Abschnitte (14, 18) sich auf einer imaginären kreiszylinderförmigen Oberfläche befinden, um eine Zylinderkammer (20) teilweise zu begrenzen.

13. Schrank nach einem der vorhergehenden Ansprüche, der zum Beispiel durch Blasformen aus Kunststoffmaterial gefertigt ist.

14. Schrankanordnung (1), die umfasst:
- einen Schrank (2) nach einem der vorhergehenden Ansprüche;
- einen Deckel (60), der von dem Schrank trennbar ist.

15. Schrankanordnung nach Anspruch 14, wobei der Deckel eine Einfassung (62) umfasst, die ringförmig unterbrochen ist.

16. Schrankanordnung nach Anspruch 14 oder 15, wobei der Deckel eine Mündungsöffnung (70) und eine Mündungswand (72) hat, die nach innen von dem Deckel (64) vorsteht, die eine Mündung in Richtung der Öffnung des Salzlösungsbehälters (6) bildet.

17. Wasserenthärter (100), der umfasst:
- einen Schrank (2) nach einem der Ansprüche 1 bis 13;
- einen Zylinder (102), der in der Zylinderkammer (20) des Schranks (2) untergebracht ist.

## Revendications

1. Armoire (2) pour adoucisseur d'eau (100) comprenant une paroi fermée annulairement (4), comportant un prolongement dans le sens de la hauteur le long d'un axe vertical (Y), qui forme un réservoir à saumure (6) et un réservoir à minéraux (8), lesdits réservoirs étant en communication fluide pour le passage d'eau et étant séparés par des moyens de filtration (10) pour maintenir à l'écart les grains ou pastilles de saumure dans le réservoir à saumure (6), **caractérisé en ce que** les moyens de filtration (10) comprennent des saillies (40, 40', 40") disposées entre le réservoir à saumure et le réservoir à minéraux afin de former une grille de filtration.

2. Armoire selon la revendication 1, dans laquelle les moyens de filtration sont perméables à l'eau.

3. Armoire selon la revendication 1 ou 2, dans laquelle les moyens de filtration s'étendent de la partie inférieure de l'armoire jusqu'à une hauteur prédéfinie, par exemple, jusqu'à la partie supérieure de ladite armoire.

4. Armoire selon l'une quelconque des revendications 1 à 3, dans laquelle les saillies (40, 40', 40") se projettent à partir de la paroi (4) et sont formées d'un seul tenant avec elle.

5. Armoire selon la revendication 4, dans laquelle un évidement (42) sur l'autre face de la paroi (4) correspond à chaque saillie de forme identique.

6. Armoire selon la revendication 4 ou 5, dans laquelle les moyens de filtration 10 présentent :
- de la partie inférieure de l'armoire (2) jusqu'à une première hauteur prédéfinie, des saillies rectangulaires et parallèles (40') qui sont superposées axialement et sont allongées dans la direction de transit de la saumure;
- de la première hauteur prédéfinie jusqu'à une seconde hauteur prédéfinie, par exemple, jusqu'en haut de l'armoire, des saillies rectangulaires (40") allongées axialement, en alternance sur deux rangées parallèles disposées l'une à côté de l'autre dans la direction de transit de la saumure.

7. Armoire selon l'une quelconque des revendications 4 à 6, dans laquelle les saillies ont une empreinte circulaire.

8. Armoire selon l'une quelconque des revendications précédentes, dans laquelle la paroi (4) comprend une partie avant (12) en forme d'arc, convexe vers l'extérieur, qui délimite partiellement le réservoir à saumure (6).

9. Armoire selon l'une quelconque des revendications précédentes, dans laquelle la paroi (4) comprend une première partie postérieure (14) en forme d'arc, concave vers l'extérieur, qui délimite partiellement le réservoir à saumure (6).

10. Armoire selon l'une quelconque des revendications précédentes, dans laquelle la paroi (4) comprend une partie latérale (16) en forme d'arc, concave vers l'extérieur, qui délimite partiellement le réservoir à saumure (6) et le réservoir à minéraux (8).

11. Armoire selon l'une quelconque des revendications précédentes, dans laquelle la paroi (4) comprend une seconde partie postérieure (18) en forme d'arc, concave vers l'extérieur, qui délimite partiellement le réservoir à minéraux (8).

12. Armoire selon les revendications 9 et 11, dans laquelle les parties postérieures (14, 18) sont situées sur une surface cylindro-circulaire imaginaire afin de délimiter partiellement un compartiment cylindrique (20).

13. Armoire selon l'une quelconque des revendications précédentes, fabriquée à partir de matière plastique, par exemple par moulage par soufflage.

14. Ensemble armoire (1) comprenant :
- une armoire (2) selon l'une quelconque des revendications précédentes ;
- un couvercle (60) séparable de l'armoire.

15. Ensemble armoire selon la revendication 14, dans lequel le couvercle comprend une jupe (62) interrompue annulairement.

16. Ensemble armoire selon la revendication 14 ou 15, dans lequel le couvercle comporte une ouverture de bouche (70) et une paroi de bouche (72) faisant saillie vers l'intérieur du couvercle (64), qui forme une bouche vers l'ouverture du réservoir à saumure (6).

17. Adoucisseur d'eau (100) comprenant :
- une armoire (2) selon l'une quelconque des revendications 1 à 13 ;
- un cylindre (102) logé dans le compartiment cylindrique (20) de l'armoire (2).
